# EUROPÄISCHE PATENTSCHRIFT

(11) **EP 1 291 076 B1**
(45) Veröffentlichungstag und Bekanntmachung des Hinweises auf die Patenterteilung: **25.07.2007**
(21) Anmeldenummer: 02019348.8
(22) Anmeldetag: 29.08.2002
(51) Int. Cl.: B01J 19/12, H05B 6/80, B01J 19/24, H05H 1/24, H05B 6/78

(54) **Pyrolysevorrichtung und Pyrolyseverfahren**
Pyrolysing apparatus and pyrolysing process
Dispositif de pyrolyse et procédé de pyrolyse

(30) Priorität: 05.09.2001 DE 10143375
(43) Veröffentlichungstag der Anmeldung: 12.03.2003
(73) Patentinhaber: Deutsches Zentrum für Luft- und Raumfahrt e.V., 51147 Köln (DE)
(72) Erfinder: Holzschuh, Franz, 74354 Besigheim (DE); Prothmann, Reinhold, 73732 Esslingen (DE); Renz, Günther, Dr., 70794 Filderstadt (DE)
(74) Vertreter: Hoeger, Stellrecht & Partner Patentanwälte

(56) Entgegenhaltungen:
- EP-A- 0 489 078
- DE-A- 19 701 094
- US-A- 4 125 389
- US-A- 4 644 877

## Beschreibung

Die Erfindung betrifft eine Pyrolysevorrichtung, umfassend einen Mikrowellengenerator, einen Hohlleiter, welcher an den Mikrowellengenerator gekoppelt ist und in dem eine stehende Welle erzeugbar ist, und ein Fluidrohr, durch welches in einer Fluidführungsrichtung ein Fluid quer zur Ausbreitungsrichtung der stehenden Welle führbar ist, wobei in dem Fluidrohr eine Pyrolysezelle gebildet ist, in der das Fluid durch die stehende elektromagnetische Welle zur Bildung eines Mikrowellenplasmas beaufschlagbar ist.

Ferner betrifft die Erfindung ein Pyrolyseverfahren, bei dem ein Fluid mit einem zu pyrolysierenden Anteil durch eine Pyrolysezelle geführt wird, welche mit einer stehenden elektromagnetischen Welle zur Bildung eines Mikrowellenplasmas beaufschlagt wird.

Eine derartige Vorrichtung und ein derartiges Verfahren sind aus der EP 0 489 078 B1 bekannt. Pyrolyse ist die thermische Zersetzung chemischer Verbindungen (mit oder ohne Sauerstoffzutritt). Mittels einer solchen Vorrichtung und eines solchen Verfahrens lassen sich beispielsweise organische Dämpfe, insbesondere Lösemitteldämpfe, entsorgen, indem die entsprechenden organischen Moleküle über Mikrowellenbeaufschlagung pyrolysiert werden.

Aus der DE 197 01 094 A1 ist ein Verfahren zur Erwärmung des Kühlmittels im Kühlmittelkreislauf einer Brennkraftmaschine bekannt, bei dem das Kühlmittel mittels Mikrowellen erwärmt wird.

Davon ausgehend liegt der Erfindung die Aufgabe zugrunde, das eingangs genannte Verfahren und die eingangs genannte Vorrichtung so zu verbessern, daß eine hohe Abbaurate von zu pyrolysierenden Molekülen erreichbar ist.

Diese Aufgabe wird bei der eingangs genannten Vorrichtung erfindungsgemäß dadurch gelöst, daß die Pyrolysezelle in Richtung eines Auslasses durch ein Metallgitter begrenzt ist.

Solch ein Metallgitter wirkt als Abschirmgitter für die Mikrowelle, wodurch verhinderbar ist, daß sich eine Entladungsdelle in das Fluidrohr als Entladungsrohr außerhalb eines Aktivatorraums (der Pyrolysezelle) ausdehnt. Insbesondere wird dabei die Entstehung einer propagierenden Welle in dem Fluidrohr im wesentlichen unterdrückt. Diese propagierende Welle würde ohne das Metallgitter längs des Fluidrohrs durch dieses laufen und damit Energie aus der Pyrolysezelle abführen. Dadurch wiederum würde ein erheblicher Anteil der eingekoppelten Mikrowellenleistung nicht zur Aktivierung von Molekülen zur Verfügung stehen, sondern müßte zur Bildung der Welle aufgebracht werden, wobei diese Welle dann wiederum diese Energie auf einen größeren Raumbereich verteilt.

Erfindungsgemäß läßt sich dann also über ein Metallgitter eine hohe Energiedichte in einen räumlich begrenzten Bereich einkoppeln, so daß entsprechend in diesem Bereich im Fluidrohr ein hoher Aktivierungsgrad herrscht. Damit lassen sich dann auch hohe Durchflußraten, beispielsweise in der Größenordnung von 5 m³ pro h eines Fluids durch das Fluidrohr verarbeiten.

Versuchsmessungen haben beispielsweise ergeben, daß sich Fluorkohlenwasserstoffe, homogenisierte Kohlenwasserstoffe und aromatische Kohlenwasserstoffe mit hoher Abbaurate abbauen lassen, beispielsweise beim Durchsatz von 3 m³ pro h und einer Konzentration von 1500 ppm mit Abbauraten von größer als 98 % für Aceton, Toluol und Dichlormethan.

Der Abbau erfolgt dabei dadurch, daß innerhalb der Pyrolysezelle in dem Fluid ein Mikrowellenplasma gebildet wird, in welchem die entsprechenden Moleküle durch Elektronenstöße der freien Elektronen im Plasma dissoziiert und ionisiert werden.

Ganz besonders vorteilhaft ist es, wenn die Pyrolysezelle durch ein erstes Metallgitter und ein in der Fluidführungsrichtung beabstandet angeordnetes zweites Metallgitter begrenzt ist. Die Mikrowelle läßt sich dadurch auf den Bereich zwischen diesen Metallgittern konzentrieren und eine Plasmaverschleppung strömungsabwärts und strömungsaufwärts aus der Pyrolysezelle wird weitgehend verhindert. Weiterhin lassen sich hohe Durchflußraten einstellen, da insbesondere ein Einlaßdurchmesser unabhängig von der Wellenlänge der stehenden Welle gewählt werden kann. (Ohne Abschirmgitter müßte dieser kleiner und insbesondere sehr viel kleiner als die halbe Wellenlänge gewählt werden, um die Mikrowellenleistung im Bereich jenseits des Auslasses bezogen auf die Fluidführungsrichtung zu konzentrieren.)

Um eine hohe Leistungsdichte in die Pyrolysezelle einkoppeln zu können, liegt vorteilhafterweise ein Wellenbauch der stehenden elektromagnetischen Welle innerhalb der Pyrolysezelle.

Um eine Ausdellung des Plasmabereichs außerhalb der Pyrolysezelle weitgehend zu verhindern, ist vorteilhafterweise eine Maschenweite eines Metallgitters kleiner als eine halbe Wellenlänge der stehenden elektromagnetischen Welle und insbesondere kleiner als 1/10 dieser Wellenlänge. Dadurch läßt sich auch auf effektive Weise die Bildung einer propagierenden Welle in der Pyrolysezelle unterdrücken.

Vorteilhafterweise sind das erste Metallgitter und das zweite Metallgitter parallel zueinander ausgerichtet, um symmetrische Verhältnisse in der Pyrolysezelle bezüglich der Plasmabildung zu erhalten.

Aus demselben Grund ist es vorteilhaft, wenn ein Metallgitter eine im wesentlichen ebene Oberfläche aufweist, die insbesondere im wesentlichen senkrecht zu einer Fluidführungsrichtung angeordnet ist.

Ferner ist es günstig, wenn ein Metallgitter eine freie Innenquerschnittsfläche des Fluidrohrs vollständig überdeckt, um so eine Ausdellung des Plasmaentladungsbereichs außerhalb der Pyrolysezelle zu verhindern.

Um eine effektive Leistungseinkopplung der Mikrowellenleistung in die Pyrolysezelle zu erhalten, ist vorteilhafterweise ein Durchtrittsbereich des Hohlleiters durch das Fluidrohr zwischen dem ersten Metallgitter und dem zweiten Metallgitter angeordnet, das heißt, der Bereich, in dem das Wellenfeld in die Pyrolysezelle eingekoppelt wird, liegt zwischen den beiden Metallgittern.

Es kann vorgesehen sein, daß ein Metallgitter auf ein bestimmtes elektrisches Potential gelegt ist oder daß ein Metallgitter auf einem Float-Potential liegt. Im letzteren Fall sitzen dann Metallgitter auf einem Potential, welches durch den Ionentransport und die Ionengeschwindigkeit in dem Fluidrohr bestimmt ist. Es kann dabei auch vorgesehen sein, daß ein bestimmtes Ausgangspotential angelegt wird und ein Floating innerhalb eines bestimmten Bereichs zugelassen wird.

Da eine hohe Leistung in die Pyrolysezelle eingekoppelt wird, ist es besonders vorteilhaft, wenn diese mittels Flüssigkühlung gekühlt wird. Dadurch läßt sich eine höhere Wärmeabfuhr erreichen als bei Luftkühlung.

Als besonders geeignetes Kühlmittel hat sich Silikonöl erwiesen, mit dem sich eine hohe Wärmeabfuhrrate hat erreichen lassen.

Zur Ausbildung geeigneter Strömungsverhältnisse und zur Ermöglichung einer effektiven Kühlung ist die Pyrolysezelle insbesondere zylindrisch ausgestaltet.

Die Pyrolysezelle ist von einem oder mehreren Ringkanälen als Kühlkanäle umgeben. Dadurch läßt sich die Pyrolysezelle über das Kühlmittel großflächig kühlen.

Insbesondere ist dabei ein Ringkanal konzentrisch zu einer Achse der Pyrolysezelle angeordnet, um keine "hot spots" zu erzeugen. Messungen haben dabei ergeben, daß innerhalb kürzester Zeit ohne effektive Kühlung bei einer Ausbildung der Pyrolysezelle als Quarzglasrohr dieses schmilzt.

Vorteilhafterweise ist zur effektiven Kühlung der Pyrolysezelle Kühlflüssigkeit in einem Ringkanal in Gegenströmung zur Fluidführungsrichtung durchgeführt.

Ganz besonders vorteilhaft ist es, wenn zur konvektiven Kühlbarkeit das Fluid in turbulenter Strömung durch das Fluidrohr geführt wird. Dadurch, daß sich dann in dem Fluid lokale Wirbel bilden, läßt sich über die Kühlflüssigkeit effektiver Wärme von der Pyrolysezelle abführen. Vergleichsrechnungen haben ergeben, daß in der Pyrolysezelle ohne turbulente Strömungsführung Temperaturen von einigen Tausend Kelvin erreicht werden können. Bei einer turbulenten Strömungsführung hat man noch den zusätzlichen Vorteil, daß sich keine Totpunkte bzw. Toträume in der Pyrolysezelle ausbilden können und daß auch äußere Wahlmöglichkeiten bezüglich der Dimensionierung vorliegen.

Es hat sich als günstig erwiesen, wenn das Fluid unter einem Druck von mindestens 30 mbar durch das Fluidrohr geführt ist. Grundsätzlich ist es auch möglich, daß das Fluid in der Pyrolysezelle unter dem Umgebungsdruck steht.

Um bei Unterdruckbeaufschlagung im Vergleich zu dem Umgebungsdruck ein effektives Unterdruckanliegen an der Pyrolysezelle zu ermöglichen, ist vorteilhafterweise ein Eingangsanschluß für Fluid in das Fluidrohr mit einem kleineren Querschnitt versehen als ein entsprechender Ausgangsanschluß zur Abfuhr von Fluid.

Es hat sich als günstig erwiesen, wenn zur Mineralisation von Schadstoffen die in den Hohlleier eingekoppelte Mikrowellenleistung mindestens 3 kW ist. Dadurch lassen sich bei einem Durchsatz von größenordnungsmäßig 3 m³ pro h an Kohlenwasserstoffen durch das Fluidrohr Abbauraten von 98 % oder größer erreichen.

Insbesondere ist es vorgesehen, daß der Hohlleiter ein Rechteckhohlleiter ist, um so auf einfache Weise eine stehende Welle mit einem Wellenbauch im Bereich der Pyrolysezelle ausbilden zu können.

Es hat sich als günstig erwiesen, wenn das Verhältnis eines Durchmessers des Fluidrohrs zu einer Querabmessung des Hohlleiters quer zur Fluidführungsrichtung kleiner als 5 ist. Dadurch ergeben sich auch in wandnahen Randbereichen des Fluidrohrs und damit in der Pyrolysezelle noch genügend hohe Energiedichten zur Mikrowellenplasmabildung und zur Aktivierung von Molekülen. Diese Verhältnisse sind dabei hochskalierbar, das heißt, wenn ein größerer Durchmesser des Fluidrohrs gewählt werden soll, um einen größeren Volumendurchsatz zu erreichen, dann sollte entsprechend die Querabmessung des Hohlleiters gleichsinnig mitangepaßt werden.

Ganz besonders vorteilhaft ist es, wenn auf die Pyrolysezelle in Fluidführungsrichtung folgend eine Nachkühlungsstrecke vorgesehen ist. Grundsätzlich ist es möglich, daß aktivierte bzw. dissoziierte Moleküle wieder rekombinieren, und damit der Abbauprozeß wieder teilweise rückgängig gemacht wird. Zudem können bei solchen Rekombinationen weitere Schadstoffe wie Dioxine und Furane entstehen. Wird aber eine Nachkühlungsstrecke nachgeschaltet, in der das Fluid, welches die Pyrolysezelle durchlaufen hat, schnell abgekühlt wird, dann lassen sich solche Rekombinationen weitgehend verhindern, das heißt, die Abbaurate der Pyrolysezelle entspricht im wesentlichen der Abbaurate, welche durch die Gesamtvorrichtung erreicht ist.

Vorteilhafterweise umfaßt dabei die Nachkühlungsstrecke ein von der Kühlung der Pyrolysezelle unabhängiges Kühlsystem, so daß Pyrolysezelle und die Nachkühlungsstrecke unabhängig voneinander steuerbar sind.

Insbesondere ist die Nachkühlungsstrecke wassergekühlt, um eine schnelle Abkühlung zu erreichen.

Es ist dabei möglich, die Nachkühlungsstrecke als Reaktionsraum einzusetzen, in welchem in der Pyrolysezelle aktivierte Moleküle als Reaktanden einsetzbar sind. Über das Kühlsystem der Nachkühlungsstrecke läßt sich die Temperatur im Reaktionsraum steuern und somit lassen sich Reaktionsprozesse mit den Reaktanden steuern.

Vorteilhafterweise sind dazu im Bereich der Nachkühlungsstrecke ein oder mehrere Einkopplungsanschlüsse vorgesehen, über die Reaktionspartner einführbar sind. Dadurch lassen sich beispielsweise mit Hilfe der aktivierten Moleküle als Reaktanden Synthesen durchführen, wobei über die Einkopplungsanschlüsse die entsprechenden Reaktionspartner bereitgestellt werden.

Vorteilhafterweise ist der Hohlleiter abstimmbar, so daß eine stehende elektromagnetische Welle einer bestimmten Wellenlänge ausbildbar ist. Eine solche Abstimmung läßt sich über einen Schieber erreichen, welcher eine Begrenzungswand des Hohlleiters bildet.

Es hat sich als günstig erwiesen, wenn die Frequenz der elektromagnetischen Welle im Bereich zwischen 0,5 GHz und 5 GHz liegt.

Die eingangs genannte Aufgabe wird bei dem eingangs genannten Pyrolyseverfahren erfindungsgemäß dadurch gelöst, daß die Pyrolysezelle in Fluidführungsrichtung mit beabstandeten Abschirmgittern für die stehende elektromagnetische Welle versehen ist und daß das Fluid zur konvektiven Kühlung der Pyrolysezelle in turbulenter Strömung durch diese geführt wird.

Bei einer Führung in turbulenter Strömung, das heißt bei der Einstellung von Reynolds-Zahlen, welche größer als ca. 2300 sind und insbesondere größer als 10000 sind, ist dafür gesorgt, daß eine Kühlflüssigkeit effektiv Wärme von Begrenzungswänden der Pyrolysezelle abführen kann.

Zudem läßt sich über die Ausbildung einer turbulenten Strömung das Ausbilden von Totpunkten und Toträumen in der Pyrolysezelle verhindern und es ergeben sich größere Wahlmöglichkeiten bezüglich der Dimensionierung der Vorrichtung zur Durchführung des Verfahrens.

Weitere vorteilhafte Ausgestaltungen des erfindungsgemäßen Verfahrens wurden bereits im Zusammenhang mit der erfindungsgemäßen Vorrichtung erläutert.

Die nachfolgende Beschreibung bevorzugter Ausführungsformen dient im Zusammenhang mit der Zeichnung der näheren Erläuterung der Erfindung. Es zeigen:
- Figur 1: eine perspektivische Ansicht einer erfindungsgemäßen Pyrolysevorrichtung in Explosionsdarstellung;
- Figur 2: eine seitliche Schnittansicht durch ein Fluidrohr;

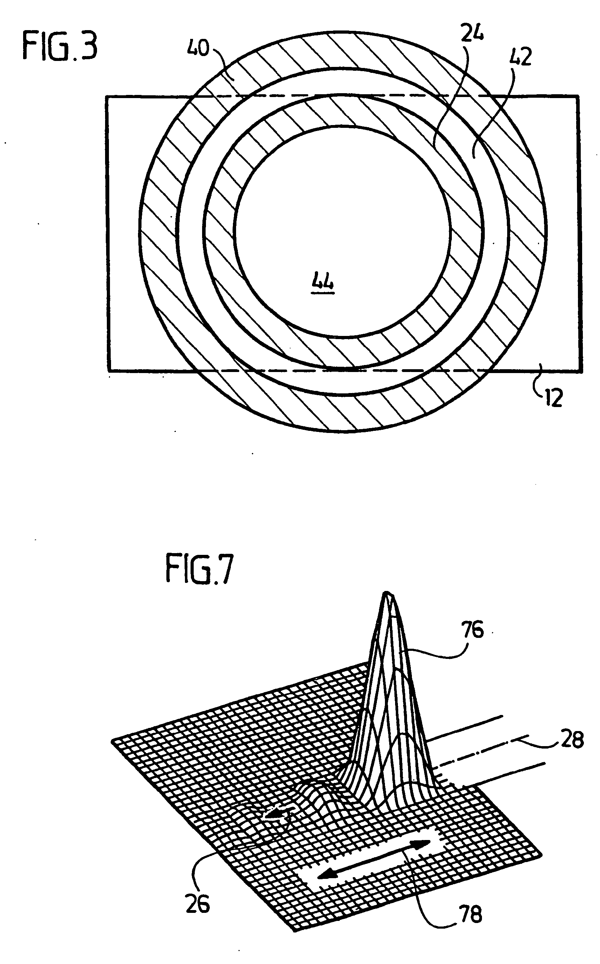

- Figur 3: eine schematische Querschnittansicht durch das Fluidrohr gemäß Figur 2 senkrecht zu der dortigen Zeichenebene;
- Figur 4: eine Darstellung des räumlichen Verlaufs der Feldstärkenteile Eₓ, E_{y} in einem Hohlleiter und in dem Fluidrohr;
- Figur 5: die gleiche Ansicht wie in Figur 4, wobei der Verlauf der Feldstärkenkomponente E_{z} gezeigt ist und Punkte Feldstärkevektoren bedeuten, die aus der Zeichenebene führen und Kreuze, bei denen die Richtung in die Zeichenebene ist;
- Figur 6: eine schematische Ansicht eines Fluidrohrs mit Aktivatorraum und Reaktionsraum;
- Figur 7: eine zeitliche Momentaufnahme einer in dem Fluidrohr propagierenden Anregungswelle, wenn keine Metallgitter vorgesehen sind, und
- Figur 8: Meßergebnisse von Abbauraten über der Mikrowellenleistung, welche mittels einer erfindungsgemäßen Vorrichtung an einem Dichlormethan-Luftgemisch mit einem Dichlormethan-Anteil von 1.600 ppm gewonnen wurden; die verschiedenen Kurven gehören zu verschiedenen Drücken und Durchflußraten.

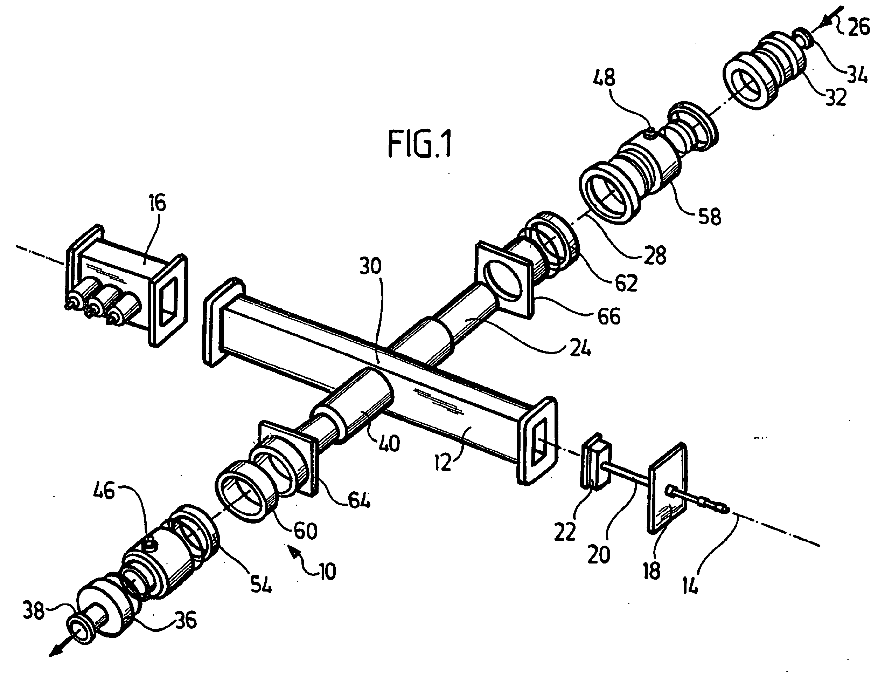

Bei einem Ausführungsbeispiel einer erfindungsgemäßen Pyrolysevorrichtung, welche in Figur 1 als Ganzes mit 10 bezeichnet ist, ist ein Rechteckhohlleiter 12 an einen Mikrowellengenerator (in der Zeichnung nicht gezeigt) gekoppelt, welcher Mikrowellen erzeugt. In dem Hohlleiter 12 können sich dabei stehende Wellen ausbilden mit einer Ausbreitungsrichtung parallel zu einer Längsrichtung 14 des Hohlleiters 12. Insbesondere können sich stehende Wellen im S-Band ausbilden.

Der Mikrowellengenerator liefert Mikrowellen im Frequenzbereich beispielsweise zwischen 0,5 GHz und 5 GHz.

Es kann vorgesehen sein, daß an einem Ende des Hohlleiters 12 eine Reflexionsmeßzelle 16 angeordnet ist, um die Reflexion zu messen. Mit ihrer Hilfe läßt sich auch die Einkopplung der Mikrowellenleistung in den Hohlleiter 12 optimieren; der Mikrowellengenerator ist der Reflexionsmeßzelle 16 dann nachgeschaltet angeordnet.

Am anderen Ende des Hohlleiters 12 sitzt eine Lagerplatte 18, in welcher eine Spindel 20 verschieblich gelagert ist, welche wiederum eine Hohlleiterwand 22 hält. Durch Verschiebung dieser Spindel 20 relativ zur Lagerplatte 18 läßt sich der Abstand der Hohlleiterwand 22 zu eben dieser Lagerplatte 18 einstellen, um so auf diese Weise eine Anpassung der für die Ausbildung einer stehenden elektromagnetischen Welle effektiven Hohlleiterbegrenzungsflächen durchführen zu können. Insbesondere läßt sich die Hohlleiterwand 22 so verschieben, daß bei gegebener Frequenz die stehende Welle sich ausbildet und darüber hinaus noch ein Wellenbauch als Bereich größter Strahlungsdichte dort liegt, wo ein Fluid durch den Hohlleiter 12 geführt ist.

Durch das elektromagnetische Wellenfeld, welches in dem Hohlleiter 12 bildbar ist, läßt sich ein Fluid durchführen. Dazu ist ein Fluidrohr 24 durch den Hohlleiter 12 hindurchgeführt und zwar insbesondere in einem mittigen Bereich des Hohlleiters 12 mit einer Fluidführungsrichtung 26 quer und insbesondere senkrecht zur Längsrichtung 14 des Hohlleiters 12.

Das Fluidrohr 24 ist dazu zylindrisch ausgebildet mit einer Achse 28, welche bezogen auf eine Querrichtung zur Längsrichtung 14 bevorzugterweise mittig durch den Hohlleiter 12 tritt. Das Fluidrohr 24 ist dabei beispielsweise aus Quarzglas hergestellt, um neben hoher Hitzebeständigkeit die Durchlässigkeit der Mikrowellen zu gewährleisten.

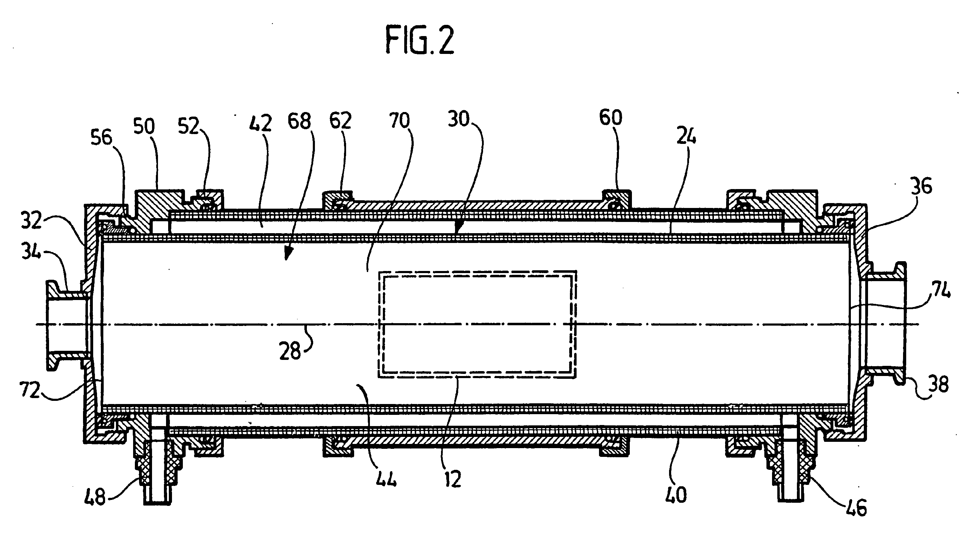

Derjenige Bereich 30 des Fluidrohrs 24 (vergleiche Figur 2), welcher durch den Hohlleiter 12 geführt ist, ist dadurch mit elektromagnetischer Strahlungsenergie beaufschlagbar.

Das Fluidrohr 24 ist mit einem Eingangsflansch 32 versehen, welcher einen Anschlußstutzen 34 aufweist, über den ein Fluid in das Fluidrohr 24 einkoppelbar ist. Dazu läßt sich insbesondere an den Anschlußstutzen 34 eine entsprechende Fluidleitung koppeln.

An dem gegenüberliegenden Ende ist das Fluidrohr mit einem Ausgangsflansch 36 mit einem Anschlußstutzen 38 versehen, über den sich das Fluidrohr durchströmte Fluid aus diesem abführen läßt.

Bevorzugterweise weist dabei der Anschlußstutzen 34 einen kleineren Querschnitt auf als der Anschlußstutzen 38 für den Ausgang, um bei der Durchführung von Fluid mittels einer Pumpe Unterdruck an dem Anschlußstutzen 38 besser halten zu können, um so sicherzustellen, daß das Fluid, welches in das Fluidrohr 24 eingekoppelt wurde, auch wieder aus diesem abgeführt wird.

Das Fluidrohr 24 bildet ein Innenrohr, welches von einem Außenrohr 40 umgeben ist, welches ebenfalls zylindrisch ausgebildet ist mit einer Achse, welche mit der Achse 28 des Fluidrohrs 24 zusammenfällt. Dieses Außenrohr 40 ist beispielsweise ebenfalls aus Quarzglas hergestellt. Zwischen dem Außenrohr 40 und dem Fluidrohr 24 ist ein Ringraum 42 gebildet, welcher als Kühlmittelkanal wirkt, durch den sich ein Kühlmittel führen läßt, mit dem das Fluidrohr 24 kühlbar ist, um so Wärme aus einem Innenraum 44 des Fluidrohrs 24 abführen zu können.

Zur Ausbildung einer Gegenstromkühlung ist dabei ein Eintrittsanschluß 46 vorgesehen, wobei dieser Eintrittsanschluß in der Nähe des Ausgangsflansches 36 liegt. Über diesen Eintrittsanschluß 46 läßt sich ein Kühlmittel und insbesondere eine Kühlflüssigkeit in den Ringraum 42 einführen, wobei dieses Kühlmittel dann den Ringraum in Gegenrichtung zur Fluidführungsrichtung 26 durchströmt.

Über einen Austrittsanschluß 48, welcher in der Nähe des Eingangsflansches 32 angeordnet ist, läßt sich das entsprechend erhitzte Kühlmittel abführen.

Erfindungsgemäß wird, um eine hohe Kühlwirkung zu erzielen, eine Kühlfüssigkeit wie Silikonöl mit hoher Wärmeaufnahmefähigkeit eingesetzt. Beispielsweise wird Silikonöl mit einem Volumenstrom von 10 I pro Minute durch den Ringraum 42 gepumpt.

Zur Verbindung und Abstandshalterung zwischen dem Fluidrohr 24 als Innenrohr und dem Außenrohr 40 ist im Bereich des Eingangsflansches 32 eine erste Verbindungsvorrichtung 50 vorgesehen, welche an einem Ende 52 an einem mit dem Außenrohr 40 verbundenen beispielsweise ringförmigen Flansch 54 gehalten ist und an einem anderen Ende 56 an dem Fluidrohr 24 beispielsweise mittels des Eingangsflansches 32 gehalten ist.

Eine entsprechende zweite Verbindungsvorrichtung 58, welche insbesondere gleich ausgebildet ist wie die erste Verbindungsvorrichtung 50, hält das Außenrohr 40 relativ zum Innenrohr 24 im Bereich des Ausgangsflansches 36.

Es kann ferner vorgesehen sein, daß das Außenrohr 40 noch beabstandete Ringflansche 60, 62 hält, über die mittels weiteren jeweils zugeordneten Haltevorrichtungen 64, 66 das Außenrohr 40 relativ zu dem Hohlleiter 12 fixierbar ist, um so für eine zusätzliche Halterung zu sorgen.

In dem Innenraum 44 des Fluidrohrs 24 ist eine Pyrolysezelle 68 mit einem Aktivatorraum 70 gebildet. In diese Pyrolysezelle 68 lassen sich chemische Verbindungen thermisch zersetzen (mit oder ohne Sauerstoffzutritt), indem Moleküle über ein durch die stehende Welle erzeugtes Mikrowellenplasma durch Elektronenstoßprozesse angeregt werden. Diese Elektronenstoßprozesse im Plasma bewirken dabei eine Dissoziation und Ionisation von Molekülen oder eine Ionisation ohne vorherige Dissoziation.

Die Pyrolysezelle 68 ist, bezogen auf die Fluidführungsrichtung 26, durch ein erstes Metallgitter 72 und ein beabstandet davon angeordnetes zweites Metallgitter 74 (siehe Figur 2) "elektrisch" abgeschlossen, wobei die Fluidströmung durch die Metallgitter 72 und 74 im wesentlichen nicht behindert wird. Die Maschenweite der Metallgitter 72, 74 ist kleiner als die halbe Wellenlänge der stehenden Welle im Hohlleiter 12 und insbesondere kleiner als 1/10 dieser Wellenlänge. Dadurch ist jeweils ein Mikrowellenabschirmgitter gebildet, das die Ausbildung einer Entladungsdelle in Bereiche mit geringerer elektromagnetischer Energiedichte verhindert. Dadurch läßt sich der Bereich, in dem sich das Mikrowellenplasma bildet, auf den Bereich zwischen den beiden Metallgittern 72 und 74 begrenzen und damit entsprechend die Energieeinkopplung in das Fluid zur Mikrowellenplasmabildung begrenzen. Damit wiederum läßt sich eine hohe Leistungsdichte in das Fluid einkoppeln, da die Metallgitter 72 und 74 den Aktivatorraum 70 begrenzen.

Die Metallgitter 72 und 74 sind dabei parallel zueinander ausgerichtet mit einer Oberflächennormale im wesentlichen parallel zu der Achse 28.

Die Metallgitter 72 und 74 sitzen insbesondere so in dem Fluidrohr 24, daß zwischen ihnen der Hohlleiter 12 angeordnet ist, das heißt, daß damit ein Wellenbauch der stehenden elektromagnetischen Welle im Hohlleiter 12 dann auch zwischen den Metallgittern 72 und 74 liegt.

Über die gewählte Maschenweite läßt es sich einstellen, inwieweit noch eine Entladung sich über die Metallgitter 72 und 74 hinaus von dem Hohlleiter 12 weg ausdellt.

Es kann vorgesehen sein, daß die Metallgitter 72 und 74 jeweils auf einem bestimmten elektrischen Potential gehalten werden oder auf Float-Potentialen sitzen, das heißt auf einem elektrischen Potential sitzen, welches durch Ionentransport und Ionengeschwindigkeit in dem Fluidrohr 24 bestimmt ist.

Die Verschleppung des Mikrowellenplasmas im Fluidrohr 24 strömungsauswärts und strömungsaufwärts in der Fluidführungsrichtung 26 wird durch die Metallgitter 72 und 74 verhindert, so daß durch eine hohe Energieeinkopplung in den Aktivatorraum 70 der Pyrolysezelle 68 erreicht ist.

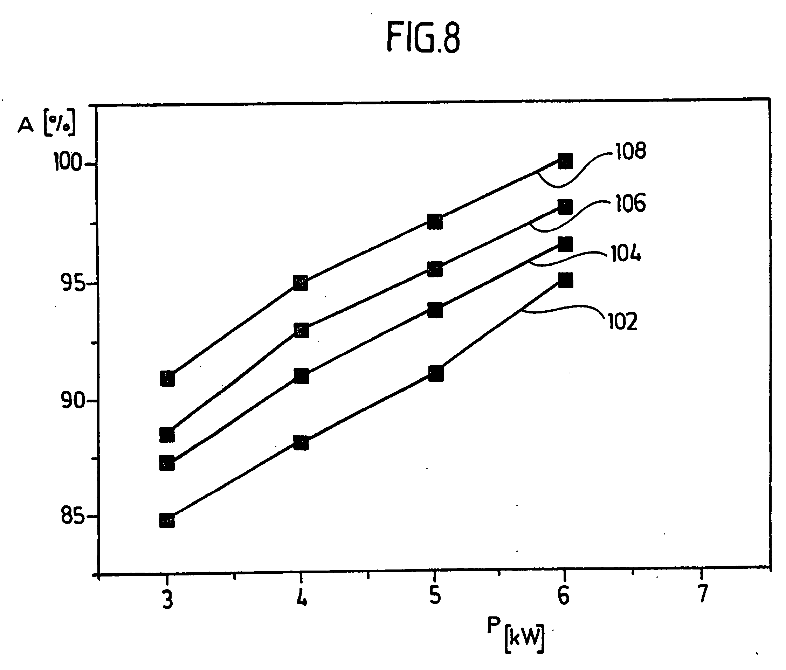

In Figur 7 ist eine Momentaufnahme einer Anregungswelle 76 in der Pyrolysezelle 68 gezeigt, wobei diese Welle eine Wellenlänge 78 aufweist; das Diagramm zeigt die Ergebnisse einer Simulation als Intensität über der Ebene der Achse 28 (x-y-Koordinaten), ohne daß der Aktivatorraum 70 durch die abschirmenden Metallgitter 72, 74 begrenzt ist. Dies hat, wie aus Figur 7 ersichtlich ist, zur Folge, daß sich eine Welle mit einem Ausbreitungsvektor parallel zur Fluidführungsrichtung 26 bildet, welche gewissermaßen Energiedichte aus dem Fluidrohr 24 abführt, die damit nicht mehr zur Anregung von Fluid in dem Fluidrohr 24 zur Verfügung steht.

Durch die Anordnung der Metallgitter 72 und 74 wird das Entstehen einer solchen Welle 76 weitgehend unterdrückt.

Das erfindungsgemäße Pyrolyseverfahren funktioniert wie folgt:

In dem Hohlleiter 12 wird eine stehende elektromagnetische Welle erzeugt mit einem Bauch, welcher in dem Bereich liegt, in dem das Fluid durch das Fluidrohr 24 durch den Hohlleiter 12 hindurchgeführt wird, das heißt, in der Pyrolysezelle 68. Der Mikrowellengenerator gibt dabei eine Leistung ab, die mindestens bei 3 kW liegt. Die Mikrowellenfrequenz liegt beispielsweise bei 2,45 GHz.

Ein Fluid wird durch den Aktivatorraum 70 als Pyrolysezelle 68 geführt mit einem Druck, welcher beispielsweise im Bereich zwischen 20 mbar und 1000 mbar liegt. Bei einem Luftgemisch ist beispielsweise eine Selbstzündung beim Anfahrdruck von 20 mbar eingetreten.

In dem Fluid, welches durch das Fluidrohr 24 strömt, wird dabei innerhalb des Aktivatorraums 70 ein Mikrowellenplasma gebildet. Durch Elektronenstoßprozesse der freien Elektronen im Mikrowellenplasma wiederum werden Moleküle im Fluid aktiviert über Dissoziation und/oder Ionisation. Wenn das Fluid ein Gemisch aus einem Trägerfluid und beispielsweise zu mineralisierenden organischen Schadstoffen darstellt, dann lassen sich dadurch diese organischen Schadstoffe, beispielsweise Chlor-Kohlenwasserstoffe oder Fluor-Kohlenwasserstoffe, abbauen und in unschädlichere beziehungsweise leichter zu verarbeitende Stoffe wie CO, CO₂, Nₓ, H₂O oder HCI zerlegen.

Dadurch, daß in dem Aktivatorraum 70 eine hohe Energiedichte vorliegt, muß für eine effektive Kühlung gesorgt werden. Dies erfolgt über eine Flüssigkeitskühlung über den Ringraum 42 gemäß einem Gegenstromprinzip, das heißt das Kühlmittel wird über den Eintrittsanschluß 46 in Richtung des Austrittsanschlusses 48 in Gegenrichtung zur Fluidführungsrichtung 26 durchgeführt. Um eine effektive Kühlung zu erhalten, wird ein konvektives Prinzip eingesetzt, das heißt, das Fluid wird in turbulenter Strömung durch das Fluidrohr 24 geführt, um eine lokale Wirbelbewegung im Fluid zu erhalten. Es bilden sich dann lokale Strömungswirbel, über die Fluid auf Begrenzungswände des Fluidrohrs 24 trifft, wobei davon wiederum Wärme über das Silikonöl im Ringraum 42 abführbar ist. Beispielsweise haben sich Reynolds-Zahlen größer als 10000 als vorteilhaft für eine effektive konvektive Kühlung des Fluidrohrs 24 erwiesen.

Durch eine turbulente Strömung des Fluids im Fluidrohr 24 ist auch erreicht, daß sich im wesentlichen keine Totpunkte im Aktivatorraum 70 bilden, in dem sich Schadstoffe ansammeln könnten. Darüber hinaus bestehen auch größere Wahlmöglichkeiten bei der Dimensionierung.

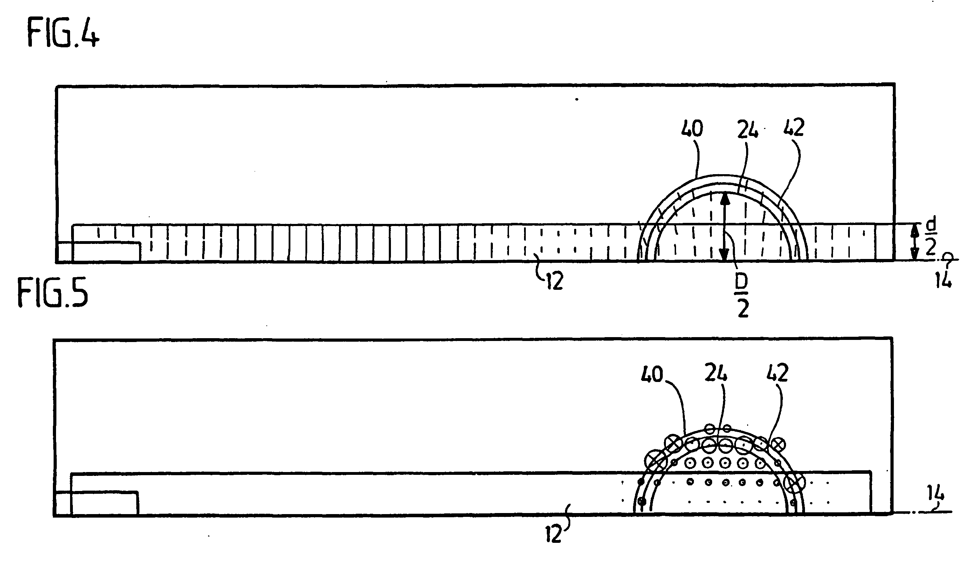

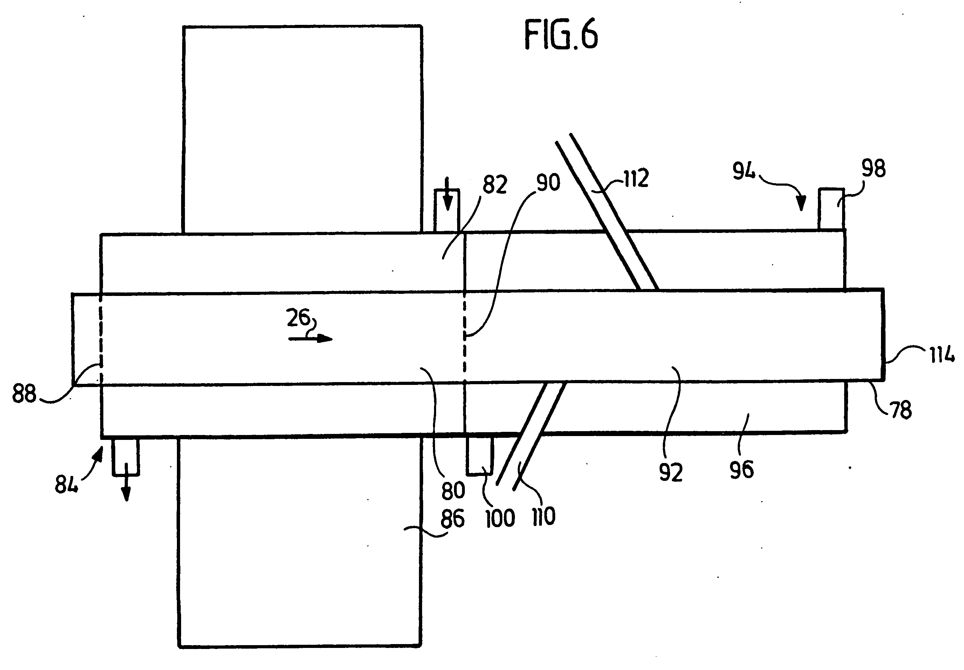

In den Figuren 4 und 5 ist beispielhaft der Verlauf der elektrischen Feldstärke der stehenden elektromagnetischen Welle im Hohlleiter 12 und im Fluidrohr 24 gezeigt, wobei in Figur 4 die Komponenten Eₓ, E_{y} gezeigt sind und in Figur 5 die Komponente E_{z} senkrecht dazu.

In Figur 4 deutet dabei die Strichlänge die Feldstärke an, wobei ersichtlich ist, daß im Bereich des Fluidrohrs 24 sich ein Wellenbauch ausbildet, so daß eine hohe Energiedichte einkoppelbar ist. Auch noch im Außenbereich des Fluidrohrs 24, das heißt im Bereich der Nähe des Ringraums 42, ist die Feldstärke genügend groß, daß eine hohe Energiedichte herrscht, um entsprechend ein Mikrowellenplasma anzuregen und dadurch wiederum über den ganzen Querschnitt des Fluidrohrs 24 Moleküle aktivieren zu können.

Es hat sich gezeigt, daß, wenn das Verhältnis eines Durchmessers D des Fluidrohrs 24 zu einer entsprechenden Querabmessung d des Hohlleiters 12 kleiner als etwa 5 und insbesondere kleiner als etwa 3 ist, selbst in den Randbereichen des Fluidrohrs 24 noch eine genügend große Energiedichte vorliegt.

Dieses Verhältnis ist skalierbar, das heißt bei entsprechender Vergrößerung des Durchmessers D des Fluidrohrs 24 können die entsprechenden Verhältnisse durch gleichsinnige Vergrößerung der Querabmessung d des Hohlleiters 12 erhalten werden.

Soll also beispielsweise ein größerer Volumendurchsatz durch ein Fluidrohr 24 eingestellt werden und dementsprechend der Durchmesser des Fluidrohrs 24 angepaßt werden, so kann durch gleichsinnige Vergrößerung des Hohlleiters 12 eine effektive Energieeinkopplung in das Fluidrohr 24 gewährleistet bleiben.

Die abschirmenden Metallgitter 72 und 74 bewirken, daß die Bildung einer propagierenden Welle 76, welche insbesondere bezogen auf die Fluidführungsrichtung 26 stromabwärts Energie aus dem Fluidrohr 24 abführen könnte, im wesentlichen unterdrückt wird.

Die in den Aktivatorraum 70 eingekoppelte Energie steht dann also mit hoher Effektivität für die Bildung des Mikrowellenplasmas und entsprechend zur Aktivierung der entsprechenden Moleküle in dem Fluid zur Verfügung.

Vorteilhafterweise wird das aus dem Aktivatorraum 70 über den Ausgangsflansch 36 abgeführte Fluid abgekühlt, so daß keine Rekombination der aktivierten Moleküle stattfinden kann, um so eine neuerliche Bildung von "Ausgangsmolekülen" weitgehend zu verhindern. Insbesondere erfolgt dabei ein schneller Abkühlungsprozeß.

In Figur 6 ist eine Variante eines Ausführungsbeispiels schematisch gezeigt, bei welcher innerhalb eines Fluidrohrs 78 ein Aktivatorraum 80 gebildet ist, welcher grundsätzlich gleich ausgebildet ist und funktioniert wie oben beschrieben. Insbesondere ist dieser Aktivatorraum 80 über einen Ringraum 82 mit einer Flüssigkeit und insbesondere Silikonöl kühlbar. Ein entsprechendes Kühlsystem ist in Figur 6 als Ganzes mit 84 bezeichnet.

Der Aktivatorraum 80 ist dabei durch eine Hohlleiter 86 geführt, in dem sich wie oben beschrieben eine stehende Welle ausbilden kann mit einem Wellenbauch in dem Aktivatorraum 80.

Der Aktivatorraum 80 ist wiederum durch ein erstes Metallgitter 88 und ein zweites Metallgitter 90 begrenzt, welche wiederum die gleiche Aufgabe haben wie oben anhand der Metallgitter 72 und 74 beschrieben.

Das zweite Metallgitter 90 trennt dabei den Aktivatorraum 80 von einem in dem Fluidrohr 24 gebildeten Reaktionsraum 92 ab. Dieser Reaktionsraum 92 weist ein Kühlsystem 94 auf, welches unabhängig von dem Kühlsystem 84 des Aktivatorraums 80 ist.

Über dieses Kühlsystem 94, welches einen den Reaktionsraum 92 umgebenden Ringraum 96 umfaßt, in dem ein Kühlmittel in Gegenstromrichtung zur Fluidführungsrichtung 26 durchführbar ist, läßt sich die Temperatur des Reaktionsraums 92 steuern.

Über einen Anschluß 98 läßt sich das Kühlmittel, insbesondere Wasser, in den Ringraum 96 einführen und über einen Anschluß 100 läßt sich das Kühlmittel abführen.

Der Reaktionsraum 92 kann dabei auch außerhalb des Fluidrohrs 78 angeordnet sein, indem beispielsweise dem Fluidrohr 24 ein entsprechendes Rohr nachgeschaltet wird, um einen Reaktionsraum zu bilden.

Erfindungsgemäß läßt sich nun durch den dem Aktivatorraum 80 nachgeschalteten Reaktionsraum 92 ein schneller Abkühlungsprozeß in dem aktivierten Fluid durchführen, um eine Rückbildung von beispielsweise organischen Molekülen nach der Dissoziierung zu verhindern. Dadurch läßt sich eben eine entsprechende Rekombination verhindern, die auch zur Bildung von Schadstoffen wie Dioxinen oder Furanen führen könnte.

In Figur 8 ist ein Beispiel einer Messung mit der erfindungsgemäßen Pyrolysevorrichtung gemäß dem erfindungsgemäßen Pyrolyseverfahren gezeigt, wobei ein bestimmter Volumenstrom eines Luftgemischs mit 1600 ppm Dichlormethan (dies entspricht dem Sättigungswert von Dichlormethan-Luftgemischen) durch das Fluidrohr 24 geführt wurde. Gezeigt ist die Abbaurate in Prozent (100 % bedeutet vollständiger Abbau von Dichlormethan) über der Mikrowellenleistung. Bei den Messungen war die maximal erreichbare Leistung des Mikrowellengenerators 6,0 kW bei einer Frequenz von 2,45 GHz. Die Kurve 102 zeigt dabei einen Durchsatz von 6000 I pro h bei einem Druck von 80 mbar in dem Fluidrohr 24. Die Kurve 104 zeigt die gemessenen Werte beim Durchsatz von 5000 I pro h bei einem Druck von 70 mbar, die Kurve 106 einen Durchsatz von 4000 I pro h bei einem Druck von 60 mbar und schließlich die Kurve 108 einen Durchsatz von 3000 I pro h bei einem Druck von 50 mbar.

Wie aus diesen gemessenen Daten ersichtlich ist, läßt sich auch bei hohen Durchsätzen bei entsprechender Steigerung der Mikrowellenleistung-Einkopplung eine hohe Abbaurate erreichen, die bei genügend hoher Leistungseinkopplung nahezu 100 % beträgt. Grundsätzlich ist dabei bei einer vorgegebenen Durchflußrate durch Erhöhung der Mikrowellenleistung das Abbauergebnis verbesserbar. Die erfindungsgemäße Vorrichtung und das erfindungsgemäße Verfahren lassen sich damit an die jeweilige Anwendung anpassen, das heißt je nach Durchflußrate läßt sich über Druckeinstellung und Leistungseinstellung das gewünschte Abbauergebnis erzielen.

Durch schnelle Abkühlung im Reaktionsraum 92 läßt sich dabei die Rekombination der dissoziierten Moleküle verhindern.

Messungen haben auch ergeben, daß beim Durchsatz von 3000 I pro h und einer Konzentration von 1500 ppm für Aceton eine Abbaurate größer als 99 %, für Toluol ebenfalls größer als 99 % und für Dichlormethan, wie in Figur 8 gezeigt, größer als 98 % erreichbar ist.

Die erfindungsgemäße Vorrichtung läßt sich dabei als "Tischgerät" ausbilden, das heißt sie ist transportabel. Mittels der erfindungsgemäßen Vorrichtung ist es grundsätzlich möglich, in dem Aktivatorraum 70 bzw. 80 mit Atmosphärendruck zu arbeiten, so daß auch dadurch eine Transportabilität gewährleistet ist.

Durch die erfindungsgemäße Pyrolysevorrichtung und das erfindungsgemäße Pyrolyseverfahren lassen sich somit beispielsweise organische Lösungsmittel abbauen und damit ist ein Verfahren und eine Vorrichtung zur Entsorgung von organischen Dämpfen, insbesondere von Lösemitteldämpfen, bereitgestellt.

Die erfindungsgemäße Vorrichtung läßt sich auch als Mikrowellenreaktor, insbesondere zur Durchführung eines Verfahrens zur Steuerung der Reaktion von aktivierten Molekülen, einsetzen. Die in dem Aktivatorraum 80 aktivierten Moleküle treten in den Reaktionsraum 92 und stellen dort grundsätzlich Reaktanden dar. Sie können dann mit weiteren Molekülen reagieren, wobei die Reaktionsbedingungen einstellbar sind. Zum einen läßt sich in gewissem Maße die Art der Aktivierung in dem Aktivatorraum 80 einstellen. Über das Kühlsystem 94 für den Reaktionsraum 92 lassen sich in diesem mittels Temperatursteuerung die Reaktionsbedingungen einstellen. Die dann als Reaktanden wirkenden aktivierten Moleküle lassen sich entsprechend einsetzen. Eine mögliche Anwendung ist beispielsweise die Essigsäureherstellung oder Ammoniaksynthese. Im letzteren Fall wird dann beispielsweise Stickstoff in dem Aktivatorraum 80 angeregt und Wasserstoff als Reaktionspartner wird in den Reaktionsraum 92 eingeführt.

Bei einer Variante einer Ausführungsform ist es dabei vorgesehen, daß über eine oder mehrere Zuführungsleitungen 110, 112, welche jeweils in den Reaktionsraum 92 münden, diesem Reaktionspartner für die Reaktanden - die aktivierten Moleküle - zuführbar sind.

Über einen Ausgang 114 lassen sich dann die Reaktionsprodukte abführen.

## Patentansprüche

1. Pyrolysevorrichtung zur thermischen Zersetzung von chemischen Verbindungen, umfassend einen Mikrowellengenerator, einen Hohlleiter (12), welcher an den Mikrowellengenerator gekoppelt ist und in dem eine stehende Welle erzeugbar ist, und ein Fluidrohr (24), durch welches in einer Fluidführungsrichtung (26) ein Fluid quer zur Ausbreitungsrichtung der stehenden Welle führbar ist, wobei in dem Fluidrohr (24) eine Pyrolysezelle (68) gebildet ist, in der das Fluid durch die stehende elektromagnetische Welle zur Bildung eines Mikrowellenplasmas beaufschlagbar ist,
**dadurch gekennzeichnet, daß** die Pyrolysezelle (68) in Richtung eines Auslasses (38) durch ein Metallgitter (74) begrenzt ist.

2. Pyrolysevorrichtung nach Anspruch 1, **dadurch gekennzeichnet, daß** die Pyrolysezelle (68) durch ein erstes Metallgitter (72) und ein in der Fluidführungsrichtung (26) beabstandet angeordnetes zweites Metallgitter (74) begrenzt ist.

3. Pyrolysevorrichtung nach Anspruch 1 oder 2, **dadurch gekennzeichnet, daß** ein Wellenbauch der stehenden elektromagnetischen Welle innerhalb der Pyrolysezelle (68) liegt.

4. Pyrolysevorrichtung nach einem der vorangehenden Ansprüche, **dadurch gekennzeichnet, daß** eine Maschenweite eines Metallgitters (72, 74) kleiner ist als eine halbe Wellenlänge der stehenden elektromagnetischen Welle.

5. Pyrolysevorrichtung nach einem der Ansprüche 2 bis 4, **dadurch gekennzeichnet, daß** das erste Metallgitter (72) und das zweite Metallgitter (74) parallel zueinander ausgerichtet sind.

6. Pyrolysevorrichtung nach einem der vorangehenden Ansprüche, **dadurch gekennzeichnet, daß** ein Metallgitter (72; 74) eine im wesentlichen ebene Oberfläche aufweist.

7. Pyrolysevorrichtung nach Anspruch 6, **dadurch gekennzeichnet, daß** ein Metallgitter (72; 74) im wesentlichen senkrecht zu einer Fluidführungsrichtung (26) angeordnet ist.

8. Pyrolysevorrichtung nach einem der vorangehenden Ansprüche **dadurch gekennzeichnet, daß** ein Metallgitter (72; 74) eine freie Innenquerschnittsfläche des Fluidrohrs (24) vollständig überdeckt.

9. Pyrolysevorrichtung nach einem der Ansprüche 2 bis 8, **dadurch gekennzeichnet, daß** ein Durchtrittsbereich des Hohlleiters (12) durch das Fluidrohr (24) zwischen dem ersten Metallgitter (72) und dem zweiten Metallgitter (74) liegt.

10. Pyrolysevorrichtung nach einem der vorangehenden Ansprüche, **dadurch gekennzeichnet, daß** ein Metallgitter (72; 74) auf ein bestimmtes elektrisches Potential gelegt ist.

11. Pyrolysevorrichtung nach einem der vorangehenden Ansprüche, **dadurch gekennzeichnet, daß** ein Metallgitter (72; 74) auf einem Float-Potential liegt.

12. Pyrolysevorrichtung nach einem der vorangehenden Ansprüche, **dadurch gekennzeichnet, daß** die Pyrolysezelle (68) mittels Flüssigkühlung gekühlt ist.

13. Pyrolysevorrichtung nach Anspruch 12, **dadurch gekennzeichnet, daß** als Kühlmittel Silikonöl eingesetzt ist.

14. Pyrolysevorrichtung nach einem der vorangehenden Ansprüche, **dadurch gekennzeichnet, daß** die Pyrolysezelle (68) zylindrisch ausgebildet ist.

15. Pyrolysevorrichtung nach Anspruch 14, **dadurch gekennzeichnet, daß** die Pyrolysezelle von einem oder mehreren Ringkanälen (42) als Kühlkanäle umgeben ist.

16. Pyrolysevorrichtung nach Anspruch 15, **dadurch gekennzeichnet, daß** ein Ringkanal (42) konzentrisch zu einer Achse (28) der Pyrolysezelle (68) angeordnet ist.

17. Pyrolysevorrichtung nach Anspruch 15 oder 16, **gekennzeichnet durch** einen Ringkanal (42) zur Durchführung von Kühlflüssigkeit in Gegenströmung zur Fluidführungsrichtung (26).

18. Pyrolysevorrichtung nach einem der vorangehenden Ansprüche, **dadurch gekennzeichnet, daß** zur konvektiven Kühlbarkeit das Fluid in turbulenter Strömung durch das Fluidrohr (24) geführt ist.

19. Pyrolysevorrichtung nach einem der vorangehenden Ansprüche, **dadurch gekennzeichnet, daß** das Fluid unter einem Druck von mindestens 30 mbar durch das Fluidrohr (24) geführt ist.

20. Pyrolysevorrichtung nach einem der vorangehenden Ansprüche, **dadurch gekennzeichnet, daß** ein Eingangsanschluß (46) für Fluid in das Fluidrohr (24) einen kleineren Querschnitt aufweist als ein Ausgangsanschluß (38).

21. Pyrolysevorrichtung nach einem der vorangehenden Ansprüche, **dadurch gekennzeichnet, daß** zur Mineralisation von Schadstoffen die in den Hohlleiter (12) eingekoppelte Mikrowellenleistung (P) mindestens 3 kW beträgt.

22. Pyrolysevorrichtung nach einem der vorangehenden Ansprüche, **dadurch gekennzeichnet, daß** der Hohlleiter (12) ein Rechteckhohlleiter ist.

23. Pyrolysevorrichtung nach einem der vorangehenden Ansprüche, **dadurch gekennzeichnet, daß** das Verhältnis eines Durchmessers (D) des Fluidrohrs (24) zu einer Querabmessung (d) des Hohlleiters (12) quer zur Fluidführungsrichtung (26) kleiner als fünf ist.

24. Pyrolysevorrichtung nach einem der vorangehenden Ansprüche, **dadurch gekennzeichnet, daß** eine auf die Pyrolysezelle (68) in Fluidführungsrichtung (26) folgende Nachkühlungsstrecke (92) vorgesehen ist.

25. Pyrolysevorrichtung nach Anspruch 24, **dadurch gekennzeichnet, daß** die Nachkühlungsstrecke (92) eine von der Kühlung der Pyrolysezelle (68) unabhängiges Kühlsystem (94) umfaßt.

26. Pyrolysevorrichtung nach Anspruch 25, **dadurch gekennzeichnet, daß** die Nachkühlungsstrecke (92) wassergekühlt ist.

27. Pyrolysevorrichtung nach einem der Ansprüche 24 bis 26, **dadurch gekennzeichnet, daß** die Nachkühlungsstrecke (92) als Reaktionsraum einsetzbar ist, in welchem in der Pyrolysezelle (68) aktivierte Moleküle als Reaktanden einsetzbar sind.

28. Pyrolysevorrichtung nach einem der Ansprüche 24 bis 27, **dadurch gekennzeichnet, daß** im Bereich der Nachkühlungsstrecke (92) ein oder mehrere Einkopplungsanschlüsse vorgesehen sind.

29. Pyrolysevorrichtung nach einem der vorangehenden Ansprüche, **dadurch gekennzeichnet, daß** der Hohlleiter (12) abstimmbar ist, so daß eine stehende elektromagnetische Welle einer bestimmten Wellenlänge ausbildbar ist.

30. Pyrolysevorrichtung nach einem der vorangehenden Ansprüche, **dadurch gekennzeichnet, daß** die Frequenz der elektromagnetischen Welle im Bereich zwischen 0,5 GHz und 5 GHz liegt.

31. Pyrolyseverfahren zur thermischen Zersetzung von chemischen Verbindungen, bei dem ein Fluid mit einem zu pyrolysierenden Anteil durch eine Pyrolysezelle geführt wird, welche mit einer stehenden elektromagnetischen Welle zur Bildung eines Mikrowellenplasmas beaufschlagt wird, **dadurch gekennzeichnet, daß** die Pyrolysezelle in Fluidführungsrichtung mit beabstandeten Abschirmgittern für die stehende elektromagnetische Welle versehen ist und daß das Fluid zur konvektiven Kühlung der Pyrolysezelle in turbulenter Strömung durch diese geführt wird.

32. Pyrolyseverfahren nach Anspruch 31, **dadurch gekennzeichnet, daß** die Pyrolysezelle über einen oder mehrere Ringkanäle, welche diese umgeben, gekühlt wird.

33. Pyrolyseverfahren nach Anspruch 31 oder 32, **dadurch gekennzeichnet, daß** die Pyrolysezelle flüssigkeitsgekühlt wird.

34. Pyrolyseverfahren nach Anspruch 33, **dadurch gekennzeichnet, daß** als Kühlflüssigkeit Silikon eingesetzt wird.

35. Pyrolyseverfahren nach einem der Ansprüche 31 bis 33, **dadurch gekennzeichnet, daß** in einer Nachkühlungsstrecke das durch die Pyrolysezelle geführte Fluid abgekühlt wird.

## Claims

1. Pyrolysis apparatus for the thermal degradation of chemical compounds, comprising a microwave generator, a waveguide (12) coupled to the microwave generator, a standing wave being generatable in said waveguide, and a fluid pipe (24), a fluid being guided through said pipe in a fluid guidance direction (26) transverse to the direction of propagation of the standing wave, wherein a pyrolysis cell (68) is formed in the fluid pipe (24), the fluid being acted upon in said cell by the standing electromagnetic wave for the formation of a microwave plasma, **characterized in that** the pyrolysis cell (68) is limited in the direction of an outlet (38) by a metal grid (74).

2. Pyrolysis apparatus as defined in claim 1, **characterized in that** the pyrolysis cell (68) is limited by a first metal grid (72) and a second metal grid (74) arranged in spaced relationship in the fluid guidance direction (26).

3. Pyrolysis apparatus as defined in claim 1 or 2, **characterized in that** a wave loop of the standing electromagnetic wave is located within the pyrolysis cell (68).

4. Pyrolysis apparatus as defined in any one of the preceding claims, **characterized in that** a mesh aperture of a metal grid (72, 74) is smaller than half a wavelength of the standing electromagnetic wave.

5. Pyrolysis apparatus as defined in any one of claims 2 to 4, **characterized in that** the first metal grid (72) and the second metal grid (74) are aligned parallel to one another.

6. Pyrolysis apparatus as defined in any one of the preceding claims, **characterized in that** a metal grid (72; 74) has an essentially flat surface.

7. Pyrolysis apparatus as defined in claim 6, **characterized in that** a metal grid (72; 74) is arranged essentially at right angles to a fluid guidance direction (26).

8. Pyrolysis apparatus as defined in any one of the preceding claims, **characterized in that** a metal grid (72; 74) covers a free internal cross-sectional surface of the fluid pipe (24) completely.

9. Pyrolysis apparatus as defined in any one of claims 2 to 8, **characterized in that** an area of the waveguide (12) passing through the fluid pipe (24) is located between the first metal grid (72) and the second metal grid (74).

10. Pyrolysis apparatus as defined in any one of the preceding claims, **characterized in that** a metal grid (72; 74) is at a specific electrical potential.

11. Pyrolysis apparatus as defined in any one of the preceding claims, **characterized in that** a metal grid (72; 74) is at a float potential.

12. Pyrolysis apparatus as defined in any one of the preceding claims, **characterized in that** the pyrolysis cell (68) is cooled by way of liquid cooling.

13. Pyrolysis apparatus as defined in claim 12, **characterized in that** silicone oil is used as coolant.

14. Pyrolysis apparatus as defined in any one of the preceding claims, **characterized in that** the pyrolysis cell (68) is of a cylindrical design.

15. Pyrolysis apparatus as defined in claim 14, **characterized in that** the pyrolysis cell is surrounded by one or more annular channels (42) as cooling channels.

16. Pyrolysis apparatus as defined in claim 15, **characterized in that** an annular channel (42) is arranged concentrically to an axis (28) of the pyrolysis cell (68).

17. Pyrolysis apparatus as defined in claim 15 or 16, **characterized by** an annular channel (42) for the feed-through of cooling liquid in counterflow to the fluid guidance direction (26).

18. Pyrolysis apparatus as defined in any one of the preceding claims, **characterized in that** the fluid is guided in a turbulent flow through the fluid pipe (24) for the purpose of convective coolability.

19. Pyrolysis apparatus as defined in any one of the preceding claims, **characterized in that** the fluid is guided through the fluid pipe (24) at a pressure of at least 30 mbar.

20. Pyrolysis apparatus as defined in any one of the preceding claims, **characterized in that** an entry connection (46) for fluid into the fluid pipe (24) has a smaller cross section than an exit connection (38).

21. Pyrolysis apparatus as defined in any one of the preceding claims, **characterized in that** the microwave power (P) coupled into the waveguide (12) is at least 3 kW for the purpose of mineralizing toxic agents.

22. Pyrolysis apparatus as defined in any one of the preceding claims, **characterized in that** the waveguide (12) is a rectangular waveguide.

23. Pyrolysis apparatus as defined in any one of the preceding claims, **characterized in that** the ratio of a diameter (D) of the fluid pipe (24) to a traverse dimensioning (d) of the waveguide (12) transverse to the fluid guidance direction (26) is smaller than five.

24. Pyrolysis apparatus as defined in any one of the preceding claims, **characterized in that** an aftercooling section (92) following the pyrolysis cell (68) in a fluid guidance direction (26) is provided.

25. Pyrolysis apparatus as defined in claim 24, **characterized in that** the aftercooling section (92) comprises a cooling system (94) independent of the cooling of the pyrolysis cell (68).

26. Pyrolysis apparatus as defined in claim 25, **characterized in that** the aftercooling section (92) is water-cooled.

27. Pyrolysis apparatus as defined in any one of claims 24 to 26, **characterized in that** the aftercooling section (92) is usable as a reaction chamber, molecules activated in the pyrolysis cell (68) being usable as reactants in said reaction chamber.

28. Pyrolysis apparatus as defined in any one of claims 24 to 27, **characterized in that** one or more coupling-in connections are provided in the area of the aftercooling section (92).

29. Pyrolysis apparatus as defined in any one of the preceding claims, **characterized in that** the waveguide (12) is adjustable such that a standing electromagnetic wave of a certain wavelength is able to be formed.

30. Pyrolysis apparatus as defined in any one of the preceding claims, **characterized in that** the frequency of the electromagnetic wave is in the range of between 0.5 GHz and 5 GHz.

31. Pyrolysis method for the thermal degradation of chemical compounds, wherein a fluid with a part to be pyrolysed is guided through a pyrolysis cell acted upon by a standing electromagnetic wave for the formation of a microwave plasma, **characterized in that** the pyrolysis cell is provided in a fluid guidance direction with spaced shielding grids for the standing electromagnetic wave and that the fluid is guided through the pyrolysis cell in a turbulent flow for the convective cooling thereof.

32. Pyrolysis method as defined in claim 31, **characterized in that** the pyrolysis cell is cooled via one or more annular channels surrounding it.

33. Pyrolysis method as defined in claim 31 or 32, **characterized in that** the pyrolysis cell is liquid-cooled.

34. Pyrolysis method as defined in claim 33, **characterized in that** silicone is used as cooling liquid.

35. Pyrolysis method as defined in any one of claims 31 to 33, **characterized in that** the fluid guided through the pyrolysis cell is cooled down in an aftercooling section.

## Revendications

1. Dispositif de pyrolyse pour la décomposition thermique de composés chimiques, comprenant un générateur de micro-ondes, un guide d'onde (12), lequel est couplé au générateur de micro-ondes et dans lequel une onde stationnaire peut être produite, et un tuyau à fluide (24) au travers duquel, dans un sens d'écoulement du fluide (26), un fluide peut s'écouler de manière transversale par rapport au sens de propagation de l'onde stationnaire, une cellule de pyrolyse (68) étant formée dans le tuyau à fluide (24), dans laquelle le fluide peut être alimenté par l'onde électromagnétique stationnaire pour la formation d'un plasma à micro-ondes,
**caractérisé en ce que** la cellule de pyrolyse (68) est délimitée par une grille métallique (74) dans la direction d'une sortie (38).

2. Dispositif de pyrolyse selon la revendication 1, **caractérisé en ce que** la cellule de pyrolyse (68) est délimitée par une première grille métallique (72) et par une seconde grille métallique (74) agencée de manière espacée dans le sens d'écoulement du fluide (26).

3. Dispositif de pyrolyse selon la revendication 1 ou 2, **caractérisé en ce qu'**un ventre de l'onde électromagnétique stationnaire se trouve à l'intérieur de la cellule de pyrolyse (68).

4. Dispositif de pyrolyse selon l'une quelconque des revendications précédentes, **caractérisé en ce qu'**une largeur de maille d'une grille métallique (72, 74) est inférieure à une demi-longueur d'onde de l'onde électromagnétique stationnaire.

5. Dispositif de pyrolyse selon l'une quelconque des revendications 2 à 4, **caractérisé en ce que** la première grille métallique (72) et la seconde grille métallique (74) sont orientées parallèlement l'une à l'autre.

6. Dispositif de pyrolyse selon l'une quelconque des revendications précédentes, **caractérisé en ce qu'**une grille métallique (72, 74) présente une surface essentiellement plane.

7. Dispositif de pyrolyse selon la revendication 6, **caractérisé en ce qu'**une grille métallique (72, 74) est agencée essentiellement perpendiculairement à un sens d'écoulement de fluide (26).

8. Dispositif de pyrolyse selon l'une quelconque des revendications précédentes, **caractérisé en ce qu'**une grille métallique (72, 74) recouvre entièrement une surface de section interne libre du tuyau à fluide (24).

9. Dispositif de pyrolyse selon l'une quelconque des revendications 2 à 8, **caractérisé en ce qu'**une zone de passage du guide d'onde (12) au travers du tuyau à fluide (24) se situe entre la première grille métallique (72) et la seconde grille métallique (74).

10. Dispositif de pyrolyse selon l'une quelconque des revendications précédentes, **caractérisé en ce qu'**une grille métallique (72, 74) est placée sur une tension électrique déterminée.

11. Dispositif de pyrolyse selon l'une quelconque des revendications précédentes, **caractérisé en ce qu'**une grille métallique (72, 74) se trouve sur une tension flottante.

12. Dispositif de pyrolyse selon l'une quelconque des revendications précédentes, **caractérisé en ce que** la cellule de pyrolyse (68) est refroidie au moyen d'un refroidissement par du liquide.

13. Dispositif de pyrolyse selon la revendication 12, **caractérisé en ce que** de l'huile silicone est utilisée comme moyen de refroidissement.

14. Dispositif de pyrolyse selon l'une quelconque des revendications précédentes, **caractérisé en ce que** la cellule de pyrolyse (68) est formée de manière cylindrique.

15. Dispositif de pyrolyse selon la revendication 14, **caractérisé en ce que** la cellule de pyrolyse est entourée d'un ou plusieurs canaux annulaires (42) utilisés comme canaux de refroidissement.

16. Dispositif de pyrolyse selon la revendication 15, **caractérisé en ce qu'**un canal annulaire (42) est agencé de manière concentrique par rapport à un axe (28) de la cellule de pyrolyse (68).

17. Dispositif de pyrolyse selon la revendication 15 ou 16, **caractérisé par** un canal annulaire (42) pour le passage d'un liquide de refroidissement à contre-courant du sens d'écoulement du fluide (26).

18. Dispositif de pyrolyse selon l'une quelconque des revendications précédentes, **caractérisé en ce que**, pour un refroidissement convectif, le fluide est conduit en un courant turbulent au travers du tuyau à fluide (24).

19. Dispositif de pyrolyse selon l'une quelconque des revendications précédentes, **caractérisé en ce que** le fluide est conduit au travers du tuyau à fluide (24) sous une pression d'au moins 30 mbar.

20. Dispositif de pyrolyse selon l'une quelconque des revendications précédentes, **caractérisé en ce qu'**un raccord d'entrée (46) pour fluide dans le tuyau à fluide (24) présente une section transversale plus petite qu'un raccord de sortie (38).

21. Dispositif de pyrolyse selon l'une quelconque des revendications précédentes, **caractérisé en ce que**, pour la minéralisation de polluants, la puissance des micro-ondes (P) couplée dans le guide d'onde (12) s'élève au moins à 3 kW.

22. Dispositif de pyrolyse selon l'une quelconque des revendications précédentes, **caractérisé en ce que** le guide d'onde (12) est un guide d'onde rectangulaire.

23. Dispositif de pyrolyse selon l'une quelconque des revendications précédentes, **caractérisé en ce que** le ratio d'un diamètre (D) du tuyau à fluide (24) par rapport à une dimension transversale (d) du guide d'onde (12) au travers du sens d'écoulement du fluide (26) est inférieur à cinq.

24. Dispositif de pyrolyse selon l'une quelconque des revendications précédentes, **caractérisé en ce qu'**est prévue une section de post-refroidissement (92) sur la cellule de pyrolyse (68), à la suite dans le sens d'écoulement de fluide (26).

25. Dispositif de pyrolyse selon la revendication 24, **caractérisé en ce que** la section de post-refroidissement (92) comprend un système de refroidissement (94) indépendant du refroidissement de la cellule de pyrolyse (68).

26. Dispositif de pyrolyse selon la revendication 25, **caractérisé en ce que** la section de post-refroidissement (92) est refroidie par de l'eau.

27. Dispositif de pyrolyse selon l'une quelconque des revendications 24 à 26, **caractérisé en ce que** la section de post-refroidissement (92) peut être utilisée comme un espace de réaction, dans lequel des molécules activées dans la cellule de pyrolyse (68) peuvent être utilisées comme réactants.

28. Dispositif de pyrolyse selon l'une quelconque des revendications 24 à 27, **caractérisé en ce qu'**une ou plusieurs connexions de couplage sont prévues dans la zone de la section de post-refroidissement (92).

29. Dispositif de pyrolyse selon l'une quelconque des revendications précédentes, **caractérisé en ce que** le guide d'onde (12) peut être réglé de sorte qu'une onde électromagnétique stationnaire d'une longueur d'onde déterminée peut être formée.

30. Dispositif de pyrolyse selon l'une quelconque des revendications précédentes, **caractérisé en ce que** la fréquence de l'onde électromagnétique se situe dans une plage comprise entre 0,5 GHz et 5 GHz.

31. Procédé de pyrolyse pour la décomposition thermique de composés chimiques, dans lequel un fluide avec une partie à pyroliser est conduit au travers d'une cellule de pyrolyse, laquelle est alimentée par une onde électromagnétique stationnaire pour la formation d'un plasma à micro-ondes, **caractérisé en ce que**, dans le sens d'écoulement du fluide, la cellule de pyrolyse est pourvue d'une grille de protection espacée pour l'onde électromagnétique stationnaire et **en ce que**, pour le refroidissement convectif de la cellule de pyrolyse, le fluide est conduit au travers de celle-ci en un courant turbulent.

32. Procédé de pyrolyse selon la revendication 31, **caractérisé en ce que** la cellule de pyrolyse est refroidie par un ou plusieurs canaux annulaires qui l'entourent.

33. Procédé de pyrolyse selon la revendication 31 ou 32, **caractérisé en ce que** la cellule de pyrolyse est refroidie par un liquide.

34. Procédé de pyrolyse selon la revendication 33, **caractérisé en ce que** la silicone est utilisée comme liquide de refroidissement.

35. Procédé de pyrolyse selon l'une quelconque des revendications 31 à 33, **caractérisé en ce que** le fluide conduit au travers de la cellule de pyrolyse est refroidi dans une section de post-refroidissement.
